# FASCICULE DE BREVET EUROPEEN

(11) **EP 4 064 628 B1**
(45) Date de publication et mention de la délivrance du brevet: **22.10.2025**
(21) Numéro de dépôt: 21305370.5
(22) Date de dépôt: 24.03.2021
(51) Int. Cl.: G06F 9/54

(54) **PROCÉDÉ DE COMMUNICATION INTERPROCESSUS ENTRE AU MOINS DEUX PROCESSUS**
VERFAHREN ZUR INTERPROZESSKOMMUNIKATION ZWISCHEN MINDESTENS ZWEI PROZESSEN
METHOD FOR INTERPROCESS COMMUNICATION BETWEEN AT LEAST TWO PROCESSES

(43) Date de publication de la demande: 28.09.2022
(73) Titulaire: Bull SAS, 78340 Les Clayes-sous-Bois (FR); Commissariat à l'Energie Atomique et aux Energies Alternatives, 75015 Paris (FR)
(72) Inventeur: GONCALVES, Thomas, 91470 Forges-les-bains (FR)
(74) Mandataire: Cabinet Camus Lebkiri

(56) Documents cités:
- EP-B1- 1 142 215
- US-A- 6 044 406
- US-A1- 2006 277 126

## Description

### DOMAINE TECHNIQUE DE L'INVENTION

L'invention a pour objet un procédé de communication interprocessus entre au moins deux processus.

Le domaine technique de l'invention est celui de la communication interprocessus entre au moins deux processus. Un processus est un ensemble cohérent d'instructions mis en œuvre par une unité de calcul aussi appelée processeur ou microprocesseur. Un ensemble cohérent d'instructions est, par exemple, un ensemble d'instructions correspondant à un programme ou à une application. L'exécution d'un tel programme est démarrée, par exemple, par une ligne de commande. A un processus donné correspond, au niveau du dispositif qui met en œuvre ce processus, un ensemble de ressources. Dans cet ensemble de ressource il y a de la mémoire qui est privée, c'est-à-dire accessible au seul processus. Cette mémoire est attribuée au processus par un ordonnanceur de processus. Un ordonnanceur de processus est aussi appelé un système d'exploitation.

La présente invention concerne un procédé qui permet, par exemple, à un processus A d'accéder à des données enregistrées dans une mémoire attribuée à un processus B. En particulier l'invention concerne un procédé mis en œuvre par deux dispositifs différents afin d'échanger des données issues de leurs mémoires attribuées.

Le domaine de l'invention est donc également celui des infrastructures informatiques à plusieurs nœuds dans lesquelles il faut qu'il soit possible que des processus hébergés par des nœuds différents puissent communiquer.

### ARRIERE-PLAN TECHNOLOGIQUE DE L'INVENTION

Dans l'état de la technique quand un processus géré par un nœud de calcul d'un réseau veut communiquer avec un autre nœud du réseau, par exemple pour réaliser une action de lecture, un protocole de rendez-vous est utilisé pour s'assurer que les deux processus sont prêts.

Ce protocole a recours au principe de l'acquittement qui consiste pour un nœud récepteur d'un premier message en provenance d'un nœud émetteur, à envoyer un deuxième message pour informer le nœud émetteur de la bonne réception du premier message dans un temps d'acquittement donné. Ainsi, une fois que le nœud émetteur a reçu le deuxième message, il est certain de la disponibilité du nœud récepteur et l'action de lecture peut être effectuée.

Si le nœud émetteur ne reçoit pas de message dans le temps d'acquittement imparti, le premier message est considéré comme n'ayant pas été reçu et une alerte de communication défectueuse entre les deux nœuds est générée. Le problème de ce fonctionnement est qu'il ne prend pas en compte ce que font les autres nœuds du réseau simultanément et donc l'éventuelle congestion du réseau qui peut avoir pour effet que le deuxième message arrive après expiration du temps d'acquittement sans que la communication entre les deux nœuds soit effectivement défectueuse. Si de nombreux processus échangent simultanément des messages sur le réseau congestionné, de multiples alertes vont alors être générées ce qui peut entraîner un crash du réseau.

Sans aller jusqu'au crash réseau cette situation dégrade les performances des nœuds de calcul qui passent trop de temps à attendre des résultats d'actions de communications.

US 2006/277126 A1 concerne un procédé de communication interprocessus.

### RESUME DE L'INVENTION

L'invention offre une solution aux problèmes évoqués précédemment, en permettant de réguler les communications par une procédé d'auto-réservation qui permet de n'effectuer une action de communication que lorsque son succès est garanti tout en limitant les communications sur le réseau.

Un aspect de l'invention concerne un procédé selon la revendication 1.

Outre les caractéristiques qui viennent d'être évoquées dans le paragraphe précédent, le procédé selon un aspect de l'invention peut présenter une ou plusieurs caractéristiques complémentaires parmi les suivantes, considérées individuellement ou selon toutes les combinaisons techniquement possibles :
- La mise à jour des nombres de jetons n'est réalisée que si la requête métier est traitée avec succès ;
- Le seuil prédéterminé est zéro ;
- La valeur du paramètre N de la première requête d'allocation est un paramètre du nœud ;
- Une requête métier est une requête de lecture ;
- Une requête métier est une requête d'écriture ;
- A réception d'une requête d'allocation émise par le gestionnaire du premier nœud, le gestionnaire du deuxième nœud diminue le nombre de jetons locaux de la valeur du paramètre compris dans la requête d'allocation pour le processus désigné par la requête ;
- Le gestionnaire de ressources du deuxième nœud met en œuvre les étapes suivantes :
   - Attente d'une notification :
      - Si aucune notification n'est reçue alors on continue à attendre ;
      - Si une notification est reçue alors pour le processus désigné par la notification on effectue les actions suivantes :
         - Lecture d'un nombre m de jetons, m étant le nombre de jetons disponibles pour le processus désigné en tant que processus distant ;
         - Evaluation (2030) de m :
            - Si m inférieur ou égal au seuil prédéterminé alors on recommence le traitement de la notification ;
            - Si m est strictement supérieur au seuil prédéterminé alors, réduction du nombre de jetons associés au processus désigné par la notification de N, N étant le nombre de jetons demandés par la notification,
            - Evaluation de m - N :
               - Si m - N est strictement supérieur au seuil prédéterminé alors le deuxième gestionnaire de ressources :
                  - Emet une réponse à la notification avec comme paramètre la valeur N ;
               - Si m - N est inférieur ou égal au seuil prédéterminé alors le deuxième gestionnaire de ressources :
                  - Emet une réponse à la notification avec comme paramètre la valeur N' = m ;
                  - Augmente le nombre de jetons associés au processus désigné en tant que processus distant de N - m.
- On réalise une temporisation avant de recommencer le traitement de la notification.

Un autre aspect de l'invention concerne un programme d'ordinateur selon la revendication 10.

Un autre aspect de l'invention concerne un support d'enregistrement selon la revendication 11.

L'invention et ses différentes applications seront mieux comprises à la lecture de la description qui suit et à l'examen des figures qui l'accompagnent.

### BREVE DESCRIPTION DES FIGURES

Les figures sont présentées à titre indicatif et nullement limitatif de l'invention.
[Fig. 1] montre une représentation schématique d'un dispositif mettant en œuvre le procédé selon l'invention.
[Fig. 2] Une illustration d'étapes du procédé selon l'invention.
[Fig. 3] Une illustration d'étapes mises en œuvre par un dispositif tiers pour coopérer avec le procédé selon l'invention.

### DESCRIPTION DETAILLEE

Les figures sont présentées à titre indicatif et nullement limitatif de l'invention.

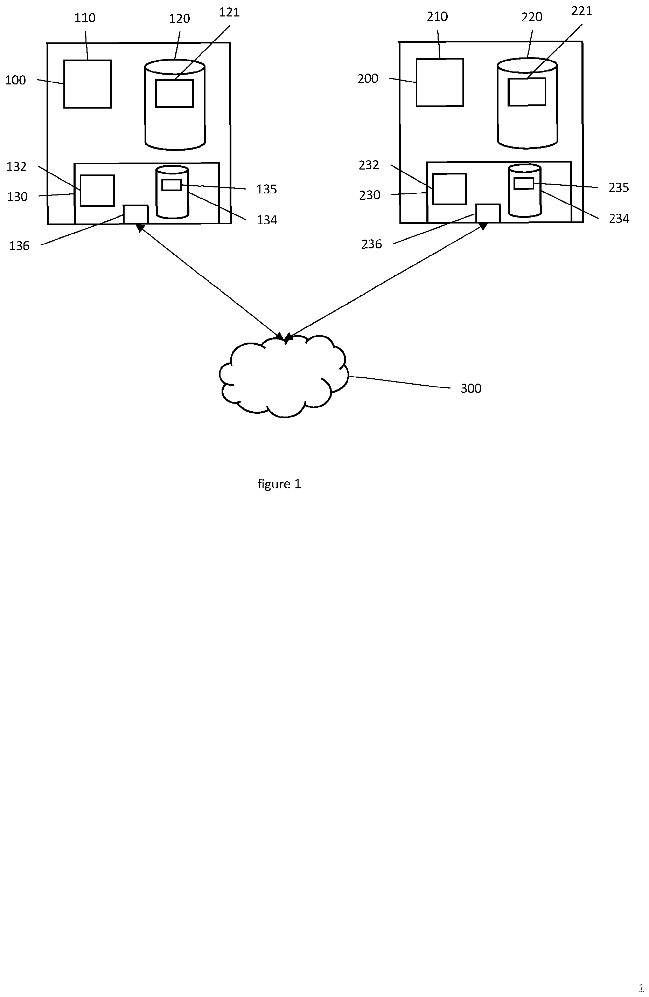

La figure 1 montre un premier nœud 100. La figure 1 montre que le premier nœud 100 comporte :
- Un microprocesseur 110 que l'on désigne aussi comme des moyens de calcul ;
- Des moyens 120 de stockage de données. Il s'agit ici d'une représentation schématique qui regroupe de la mémoire transitoire et non transitoire. La mémoire transitoire est, par exemple, de la RAM. La mémoire non transitoire est, par exemple, un disque dur, un disque SSD ou autre. Ces moyens de stockage sont locaux ou distants selon les infrastructures matérielles sur lesquelles on met en œuvre l'invention.
- Une carte 130 de gestion de ressources. La carte 130 de gestion de ressources comporte elle-même un microprocesseur 132, des moyens 134 de stockage d'un type de ceux déjà décrits et une interface 136 de communication. L'interface de communication est, par exemple, une interface « Ethernet », une interface « Fiber Channel », une interface « InfiniBand » ou une interface selon une autre norme utilisées pour les communications dans les fermes de calcul.

La figure 1 montre que les moyens de stockage du premier nœud comportent une zone 121 processus. Cette zone comporte des codes instructions et de la mémoire de travail correspondant à un premier processus mis en œuvre par le microprocesseur 110 du premier nœud.

Dans cette description, lorsque l'on attribue une action à un dispositif, cette action est réalisée par des moyens de calcul dudit dispositif mettant en œuvre des codes instructions, aussi appelés codes exécutables, enregistrés dans une mémoire de stockage dudit dispositif. De même, lorsqu'un dispositif communique, cela signifie qu'il émet et/ou reçoit des messages via une interface de communication. Ces messages sont produits et/ou traités par des moyens de calcul dudit dispositif. De manière classique, un tel message comporte au moins un identifiant d'émetteur et un identifiant de destinataire.

On peut également attribuer une action à une application, à un processus ou à un logiciel. Application, processus, ou logiciel signifie toute expression, code ou notation, d'un ensemble d'instructions destinées à provoquer un traitement de données pour effectuer une fonction particulière directement ou indirectement (e.g. après une action de conversion vers un autre code). Les exemples de code de programme peuvent inclure, sans s'y limiter, un sous-programme, une fonction, une application exécutable, un code source, un code objet, une bibliothèque et/ou tout autre séquence d'instructions conçues pour l'exécution sur un système informatique.

La figure 1 montre que les moyens de stockage de la carte 130 de gestion de ressources du premier nœud comporte une zone 135 gestionnaire de ressources. La zone 135 gestionnaire de ressources comporte des codes instructions correspondant à la mise en œuvre du procédé selon l'invention et des compteurs qui seront décrits plus loin.

Lorsque le premier processus émet un message, ce message est pris en charge par le gestionnaire 135 de ressources de la carte de gestions de ressources du premier nœud. Dans une architecture matérielle alternative, le gestionnaire 135 de ressources est mis en œuvre par le microprocesseur du premier nœud. Dans cette architecture alternative, la carte 130 gestion de ressource du premier nœud est assimilable à une interface réseau.

La figure 1 montre un deuxième nœud 200. Le deuxième nœud est structurellement identique au premier nœud. La figure 1 montre que le deuxième nœud comporte :
- Un microprocesseur 210 ;
- Des moyens 220 de stockage de données ;
- Une carte 230 de gestion de ressources. La carte 230 de gestion de ressource comporte elle-même un microprocesseur 232, des moyens 234 de stockage et une interface 236 de communication.

La figure 1 montre que les moyens de stockage du premier nœud comportent une zone 221 processus. Cette zone comporte des codes instructions et de la mémoire de travail correspondant à un deuxième processus mis en œuvre par le microprocesseur 210 du deuxième nœud.

La figure 1 montre que les moyens de stockage de la carte 230 de gestion de ressources du deuxième nœud comporte une zone 235 gestionnaire de ressources. La zone 235 gestionnaire de ressources comporte des codes instructions correspondant à la mise en œuvre du procédé selon l'invention et des compteurs qui seront décrits plus loin.

La figure 1 montre un réseau 300 d'interconnexion. La figure 1 montre que le premier nœud et le deuxième nœud sont connectés au réseau 300.

Le premier nœud, le deuxième nœud et le réseau 300 d'interconnexion appartiennent à un calculateur non représenté. Un calculateur comporte un grand nombre de nœuds. Typiquement ce nombre est de plusieurs milliers. Dans la pratique l'invention s'applique dès qu'il y a deux nœuds et ne connaît pas de limite supérieure.

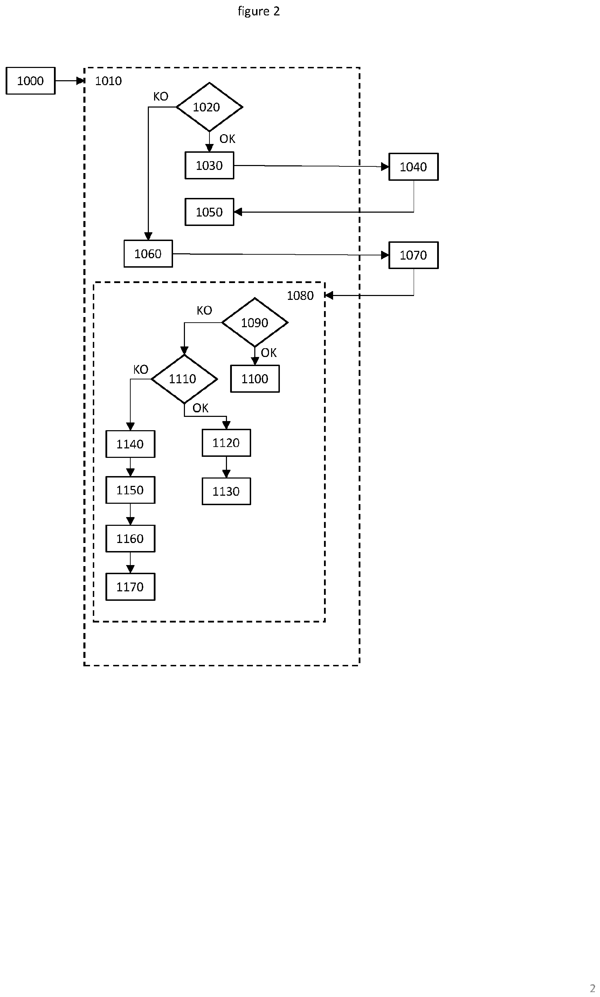

La figure 2 montre une étape 1000 d'émission par le premier processus, vers le gestionnaire de ressources du premier nœud, d'une requête métier destinée au deuxième processus.

Lorsque l'on dit qu'un processus émet, vers un gestionnaire de ressources, une requête destinée à un deuxième processus sur un deuxième nœud cela peut être mis en œuvre d'au moins deux façons :
- La requête est effectivement émise vers le gestionnaire de ressources ;
- La requête est interceptée, de manière transparente pour le processus émetteur, par le gestionnaire de ressources.

Une requête métier est, par exemple une requête de lecture d'une zone mémoire appartenant à un autre processus, ou une requête d'écriture d'une zone mémoire appartenant à un autre processus. On peut étendre la notion de lecture à l'invocation d'une fonction mise en œuvre par un autre processus, dans ce cas il s'agit de demander à cet autre processus d'effectuer un traitement et de renvoyer en réponse le résultat dudit traitement.

Dans l'exemple décrit on considère que la requête métier est une requête de lecture. Dans cet exemple, la requête métier comporte au moins un identifiant du processus distant.

La figure 2 montre une étape 1010 de réception et vérification d'une requête métier par le gestionnaire de ressources. Dans l'étape 1010 le gestionnaire de ressources du premier nœud effectue une vérification 1020 dans laquelle il vérifie s'il existe au moins un jeton associé au processus destinataire de la requête de lecture. Ici le processus destinataire est le deuxième processus.

La zone 135 gestionnaire de ressources de la carte 130 de gestion de ressources du premier nœud comporte au moins un premier compteur de jetons. D'une manière générale dans cette description un compteur de jetons est l'association d'un identifiant de processus et d'un nombre. Par soucis de concision on parle de compteur. L'identifiant de processus permet d'identifier le processus et le nœud qui l'exécute. Il est donc possible de savoir si le processus est local au nœud ou distant. Le nombre correspond à un nombre de requêtes qui peuvent encore être traitées par le processus identifié par l'identifiant. Chaque jeton correspond à une requête. On ajoute un jeton en augmentant de un le compteur. On retire un jeton en diminuant de un le compteur.

S'il existe un jeton associé au deuxième processus, c'est-à-dire si le nombre de jetons est strictement supérieur à zéro, alors le gestionnaire de ressources passe à une étape 1030 d'émission de la requête vers le deuxième processus.

Dans une étape suivante la requête métier est reçue par le gestionnaire de ressources du deuxième nœud. Le deuxième gestionnaire de ressources effectue les actions suivantes :
- Transmission de la requête au deuxième processus ;
- Réception de la réponse du deuxième processus à la requête ;
- Augmentation 1040 de un (+1) d'un compteur associé au deuxième processus au niveau du deuxième gestionnaire de ressources ;
- Emission de la réponse à la requête métier vers le gestionnaire de ressources du premier nœud.

Dans une étape suivante le gestionnaire de ressources du premier nœud reçoit la réponse à la requête métier. Le gestionnaire de ressources du premier nœud effectue alors les actions suivantes :
- Transmission de la réponse au premier processus ;
- Diminution 1050 de un (-1) du compteur associé au deuxième processus au niveau du gestionnaire de ressources du premier nœud.

On note qu'il est possible que les gestionnaires de ressources aient accès à la mémoire allouée aux processus. Dans ce cas le gestionnaire de ressources n'a pas besoin de communiquer avec le processus pour effectuer une action de lecture, il peut la faire lui-même et donc répondre à la requête métier.

On note aussi que dans une variante de l'invention l'augmentation de un (+1) du compteur associé au deuxième processus au niveau du deuxième gestionnaire de ressources est piloté par le gestionnaire de ressources du premier nœud. Dans cette variante le gestionnaire de ressources du premier nœud émet, vers le gestionnaire de ressources du deuxième nœud une requête pour augmenter de un le compteur associé au deuxième processus au niveau du deuxième gestionnaire au moment où il diminue de un le compteur associé au deuxième processus au niveau du gestionnaire de ressources du premier nœud. De ce fait l'ordre d'exécution des étapes 1040 et 1050 dépend du mode de mise en œuvre choisi et de la disponibilité des gestionnaires de ressources. En effet ils effectuent leurs actions en parallèle.

S'il n'existe pas de jeton local alors le gestionnaire de ressources du premier nœud passe à une étape 1060 d'émission, vers le gestionnaire de ressources du deuxième nœud, d'une première requête d'allocation de jetons associés au deuxième processus. Cette première requête d'allocation comporte au moins un paramètre N, où N est le nombre de jetons dont on souhaite l'allocation.

N est un paramètre du procédé selon l'invention qui est fixé au moment du démarrage du calculateur. Dans une mise en œuvre classique N est de l'ordre quelques unités ou encore compris dans l'intervalle [2, 10].

La figure 2 montre une étape 1070 de réception et de traitement, par le gestionnaire de ressources du deuxième nœud, d'une requête de demande d'allocation de jetons pour un processus. Le gestionnaire de ressources du deuxième nœud répond à cette requête en renvoyant la valeur d'une lecture du compteur associé au processus désigné par la requête d'allocation au niveau du deuxième nœud. Une fois cette lecture effectuée, le gestionnaire de ressources du deuxième nœud diminue ledit compteur du nombre de jetons N demandé par la requête d'allocation.

La figure 2 montre une étape 1080 de réception, par le gestionnaire de ressources du premier nœud, d'une réponse à la première requête d'allocation. La réponse comporte un paramètre M représentant le nombre de jetons distants associés au deuxième processus avant la réception de la requête d'allocation. En d'autres termes M est la valeur du compteur associé au deuxième processus au niveau du gestionnaire de ressources du deuxième nœud au moment de la réception de la première requête d'allocation.

Le gestionnaire de ressources du premier nœud passe alors à une étape d'évaluation de M - N, c'est-à-dire de la différence entre le nombre de jetons disponibles et le nombre de jetons demandés. En particulier on teste si cette différence est supérieure ou égale à un seuil prédéterminé. Dans notre exemple ce seuil vaut zéro (0).

Si la différence est supérieure ou égale au seuil alors le gestionnaire de ressources du premier nœud passe à une étape 1100 d'augmentation de N du nombre de jetons associés au deuxième processus au niveau du premier nœud. Il redevient dès lors possible pour des processus hébergés par le premier nœud d'émettre des requêtes vers le deuxième processus et le gestionnaire de ressources du premier nœud retourne au début de l'étape 1010 de vérification.

Si la différence est inférieure au seuil, alors, dans une étape 1110 d'évaluation de M, le gestionnaire de ressources du premier nœud évalue la valeur de M.

Si M est supérieur à la valeur prédéterminée, zéro dans notre exemple, alors le gestionnaire de ressources du premier nœud effectue les actions suivantes :
- Emission (1120) d'une deuxième requête d'allocation, pour le deuxième processus à destination du gestionnaire de ressources du deuxième nœud, avec un paramètre valant M - N. Le gestionnaire de ressources du deuxième nœud augmente alors le compteur du deuxième processus de N - M, compteur qui avait été décrémenté de N à l'étape 1070 ;
- Augmentation (1130) du nombre de jetons associés au deuxième processus au niveau du gestionnaire de ressources du premier nœud de M ;
- Retour au début de l'étape 1010 de vérification.

Si M est inférieur ou égale à la valeur prédéterminée, zéro dans notre exemple, alors le gestionnaire de ressources du premier nœud effectue les actions suivantes :
- Emission 1140, vers le gestionnaire de ressources du deuxième nœud, d'une troisième requête d'allocation pour le deuxième processus, avec un paramètre ayant pour valeur -N. Le gestionnaire de ressources du deuxième nœud augmente alors le compteur du deuxième processus de N, compteur qui avait été décrémenté de N à l'étape 1070 ; ;
- Emission 1150, vers le gestionnaire de ressources du deuxième nœud, d'une notification désignant le deuxième processus avec un paramètre ayant pour valeur N ;
- Se place 1160 dans un état d'attente d'une réponse à la notification ;
- Reçoit 1170 une réponse à la notification, cette réponse comportant un paramètre N'. Il augmente alors le nombre de jetons associés au deuxième processus au niveau du premier gestionnaire de nœud de N' puis il retourne au début de l'étape 1010 de vérification. N' peut être égal ou différent de N.

Le fait que le premier gestionnaire de ressources se mette dans un état d'attente ne signifie pas qu'il est bloqué. Il continue à traiter les requêtes d'autres processus et d'autres gestionnaires de nœud.

On a employé le terme notification par souci de clarté pour désigner une requête qui n'est pas une requête d'allocation bien qu'elle ait la même structure à savoir qu'elle désigne un processus et qu'elle comporte un nombre de jetons attendu.

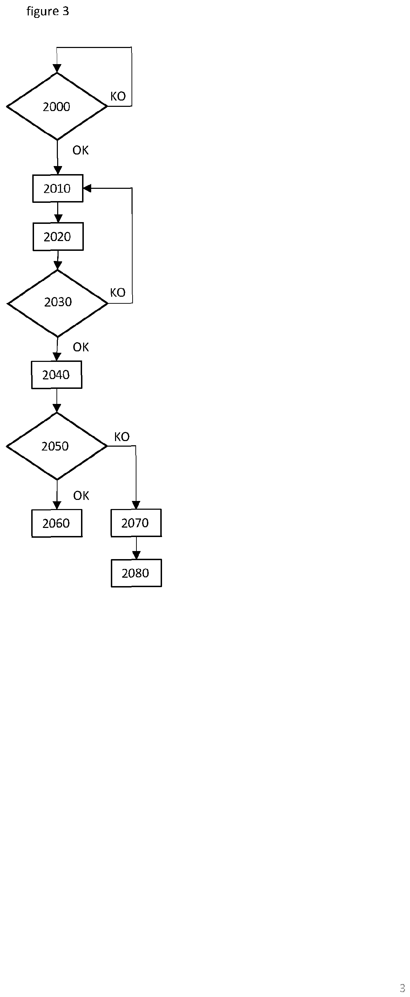

La figure 3 montre une étape 2000, mise en œuvre par le gestionnaire de ressources du deuxième nœud dans laquelle celui-ci est en attente d'une notification telle que celle précédemment décrite. Si aucune notification n'est reçue alors le gestionnaire de ressources du deuxième nœud continue à effectuer ses tâches dont l'une est d'attendre des notifications. Si une notification est reçue alors il passe à une étape 2010 de lecture des paramètres de la notification. Dans l'exemple le gestionnaire de ressources du deuxième nœud reçoit une notification désignant le deuxième processus et demandant N jetons. Une fois ces paramètres lus, il passe à l'étape 2020 suivante.

Dans l'étape 2020 le gestionnaire le gestionnaire de ressources du deuxième nœud lit la valeur du compteur associé, au niveau du gestionnaire de ressources du deuxième nœud, au processus désigné dans la notification. Cette valeur est ici appelée m. Le gestionnaire de ressources du deuxième nœud passe alors à une étape 2030 d'évaluation de m.

Dans l'étape d'évaluation de m, si m inférieur ou égal au seuil prédéterminé, zéro dans notre exemple, alors le gestionnaire de ressources du deuxième nœud retourne au début du traitement de la notification. Sinon le gestionnaire de ressources du deuxième nœud passe à une étape 2040 de réduction du compteur correspondant au processus désigné par la notification. Ce compteur est diminué de N puis le gestionnaire de ressources du deuxième nœud passe à une étape 2050 d évaluation de m - N.

Si m - N est strictement supérieur au seuil prédéterminé, dans notre exemple zéro, alors le gestionnaire de ressources du deuxième nœud effectue les actions suivantes :
- Emission (2060) d'une réponse à la notification avec un paramètre ayant pour valeur N.

Si m - N est inférieur ou égal au seuil prédéterminé, dans notre exemple zéro, alors le gestionnaire de ressources du deuxième nœud effectue les actions suivantes :
- Emission (2070) d'une réponse à la notification avec un paramètre ayant pour valeur m ;
- Augmentation (2080) du nombre de jetons associé au processus désigné par la notification au niveau du gestionnaire de ressources du deuxième nœud de N - m.

On remarque que les étapes de traitement de la notification par le gestionnaire de ressources du deuxième nœud sont calquées sur celles mises en œuvre par le gestionnaire de ressources du premier nœud pour la gestion de la requête métier. Dans la pratique on pourrait faire autrement. Le principe est d'allouer le maximum de ressources possible, ce maximum étant compris entre 1 et N, N étant le nombre de jetons demandés par la notification.

Le procédé selon l'invention permet de n'autoriser des opérations que quand le deuxième processus a des ressources disponibles et de limiter le nombre d'opérations par processus pour limiter la congestion du réseau.

Le fait d'avoir recours à une notification quand aucune ressource n'est disponible plutôt que de recommencer les étapes de réservation tant que le processus n'a pas de ressources disponibles permet de limiter le nombre de messages échangés dans le réseau. Comme la notification n'a pas de mécanisme d'acquittement, aucune alerte n'est générée pour des raisons de congestion réseau ce qui limite les crashs du calculateur.

## Revendications

1. Procédé de communication interprocessus entre au moins deux processus, chaque processus étant hébergé par un nœud sur un réseau de communication, à chaque processus étant attribué au moins une mémoire privée, un nœud hébergeant en outre un processus comportant un gestionnaire de ressources, **caractérisé en ce qu'**un gestionnaire de ressources comporte au moins un compteur de ressources pour un processus cible d'une communication, le procédé selon l'invention au moins comportant les étapes suivantes :
- Emission (1000) par un premier processus d'un premier nœud, vers le gestionnaire de ressources du premier nœud, d'une requête métier destinée à un deuxième processus d'un deuxième nœud, la requête métier étant une demande pour effectuer un traitement sur la au moins une mémoire privée du deuxième processus par le deuxième processus et de renvoyer en réponse le résultat dudit traitement ;
- Vérification (1010), par le gestionnaire du premier nœud, qu'il existe localement au moins un jeton associé au deuxième processus :
o S'il existe (1020-OK) un jeton local alors :
1. La requête métier est émise (1030) vers le deuxième processus ;
2. Le nombre de jetons locaux associés au deuxième processus est diminué (1050) d'un par le gestionnaire de ressources du premier nœud ;
3. Le nombre de jetons distants associé au deuxième processus est augmenté (1040) d'un par le gestionnaire de ressources du deuxième nœud ;
o S'il n'existe (1020-KO) pas de jeton local :
1. Emission (1060), par le gestionnaire du premier nœud vers le gestionnaire du deuxième nœud, d'une première requête d'allocation de jetons associés au deuxième processus, la première requête d'allocation comportant un paramètre N représentant le nombre de jetons demandés ;
2. Réception (1080), par le gestionnaire du premier nœud d'une réponse à la première requête d'allocation, la réponse comportant un paramètre M représentant le nombre de jetons distants associés au deuxième processus avant la réception de la première requête d'allocation ;
3. Evaluation (1090) de la valeur de M - N :
a. Si elle est supérieure ou égale à un seuil prédéterminé (1090-OK) alors le gestionnaire du premier nœud augmente (1100) le nombre de jetons locaux associés au deuxième processus de N et on retourne à l'étape (1010) de vérification ;
b. Si elle est inférieure au seuil prédéterminé (1090-KO) alors on évalue (1110) la valeur de M :
i. Si elle est supérieure au seuil prédéterminé (1110-OK) alors le gestionnaire du premier nœud émet (1120) une deuxième requête d'allocation avec un paramètre ayant pour valeur M - N, augmente (1130) le nombre de jetons locaux de M, retourne à l'étape (1010) de vérification ;
ii. Si elle est inférieure ou égale au seuil prédéterminé (1110-KO) alors, le gestionnaire du premier nœud :
1. Emet (1140) vers le gestionnaire du deuxième nœud une troisième requête d'allocation pour le deuxième processus avec un paramètre ayant pour valeur - N,
2. Emet (1150) vers le gestionnaire du deuxième nœud une notification n'ayant pas de mécanisme d'acquittement précisant qu'il attend N jetons pour le deuxième processus ;
3. Se place (1160) dans un état d'attente d'une réponse à la notification ;
4. Lorsqu'il reçoit (1170) une réponse à la notification, celle-ci comporte un paramètre N' représentant le nombre de jetons alloués, le gestionnaire du premier nœud augmente le nombre de jetons locaux associés au deuxième processus de N' et on retourne à l'étape (1010) de vérification.

2. Procédé de communication interprocessus selon la revendication précédente, **caractérisé en ce que** la mise à jour des nombres de jetons (1040, 1050) n'est réalisée que si la requête métier est traitée avec succès.

3. Procédé de communication selon l'une des revendications précédentes **caractérisé en ce que** le seuil prédéterminé est zéro.

4. Procédé de communication interprocessus selon l'une des revendications précédentes **caractérisé en ce que** la valeur du paramètre N de la première requête d'allocation est un paramètre du nœud.

5. Procédé de communication interprocessus selon l'une des revendications précédentes **caractérisé en ce qu'**une requête métier est une requête de lecture.

6. Procédé de communication interprocessus selon l'une des revendications 1 à 4, **caractérisé en ce qu'**une requête métier est une requête d'écriture.

7. Procédé de communication interprocessus selon l'une des revendications précédentes **caractérisé en ce qu'**à réception d'une requête d'allocation émise par le gestionnaire du premier nœud, le gestionnaire du deuxième nœud diminue le nombre de jetons locaux de la valeur du paramètre compris dans la requête d'allocation pour le processus désigné par la requête.

8. Procédé de communication interprocessus selon l'une des revendications précédentes **caractérisé en ce que** le gestionnaire de ressources du deuxième nœud met en œuvre les étapes suivantes :
- Attente (2000) d'une notification :
∘ Si aucune notification n'est reçue alors on continue (2000) à attendre ;
∘ Si une notification est reçue alors pour le processus désigné (2010) par la notification on effectue les actions suivantes :
1. Lecture (2020) d'un nombre m de jetons, m étant le nombre de jetons disponibles pour le processus désigné en tant que processus distant ;
2. Evaluation (2030) de m :
a. Si m inférieur ou égal au seuil prédéterminé (2030-KO) alors on recommence le traitement (2010) de la notification ;
b. Si m est strictement supérieur au seuil prédéterminé (2030-OK) alors, réduction (2040) du nombre de jetons associés au processus désigné par la notification de N, N étant le nombre de jetons demandés par la notification,
c. Evaluation de m - N :
i. Si m - N est strictement supérieur au seuil prédéterminé (2050-OK) alors le deuxième gestionnaire de ressources :
1. Emet (2060) une réponse à la notification avec comme paramètre la valeur N ;
ii. Si m - N est inférieur ou égal au seuil prédéterminé alors le deuxième gestionnaire de ressources (2050-KO) :
1. Emet une réponse à la notification avec comme paramètre la valeur N' = m ;
2. Augmente le nombre de jetons associés au processus désigné en tant que processus distant de N - m.

9. Procédé de communication interprocessus selon la revendication 8 **caractérisé en ce qu'**on réalise une temporisation avant de recommencer le traitement de la notification.

10. Programme d'ordinateur pour effectuer des communications interprocessus apte à, de préférence configuré pour, mettre en œuvre un procédé de communication interprocessus selon l'une des revendications 1 à 9.

11. Support d'enregistrement sur lequel est enregistré un programme d'ordinateur pour effectuer des communications interprocessus selon la revendication 10.

## Patentansprüche

1. Verfahren zur Interprozesskommunikation zwischen mindestens zwei Prozessen, wobei jeder Prozess von einem Knoten in einem Kommunikationsnetzwerk gehostet wird, jedem Prozess mindestens ein privater Speicher zugewiesen ist und ein Knoten außerdem einen Prozess mit einem Ressourcenmanager hostet, **dadurch gekennzeichnet, dass** ein Ressourcenmanager mindestens einen Ressourcenzähler für einen Zielprozess einer Kommunikation umfasst, wobei das erfindungsgemäße Verfahren mindestens die folgenden Schritte umfasst:
- Senden (1000) einer fachspezifischen Suchanfrage durch einen ersten Prozess eines ersten Knotens an den Ressourcenmanager des ersten Knotens, die für einen zweiten Prozess eines zweiten Knotens bestimmt ist, wobei die fachspezifische Suchanfrage eine Aufforderung ist, eine Verarbeitung auf dem mindestens einen privaten Speicher des zweiten Prozesses durch den zweiten Prozess durchzuführen und als Antwort das Ergebnis dieser Verarbeitung zurückzusenden;
- Überprüfen (1010) durch den Verwalter des ersten Knotens, ob lokal mindestens ein Token vorhanden ist, das dem zweiten Prozess zugeordnet ist:
∘ Wenn ein lokales Token vorhanden ist (1020-OK), dann:
1. Wird die fachspezifische Suchanfrage (1030) an den zweiten Prozess gesendet.
2. Wird die Anzahl der mit dem zweiten Prozess verbundenen lokalen Tokens vom Ressourcenmanager des ersten Knotens um eins verringert (1050);
3. Wird die Anzahl der mit dem zweiten Prozess verbundenen Remote-Tokens vom Ressourcenmanager des zweiten Knotens um eins erhöht (1040).
∘ Wenn kein lokales Token vorhanden ist (1020-KO), dann:
1. Sendet (1060) der Verwalter des ersten Knotens eine erste Anfrage zur Zuweisung von Tokens, die dem zweiten Prozess zugeordnet sind, an den Verwalter des zweiten Knotens, wobei die erste Zuweisungsanfrage einen Parameter N enthält, der die Anzahl der angeforderten Tokens angibt;
2. Empfängt (1080) der Verwalter des ersten Knotens eine Antwort auf die erste Zuweisungsanforderung, wobei die Antwort einen Parameter M enthält, der die Anzahl der Remote-Tokens darstellt, die dem zweiten Prozess vor dem Empfang der ersten Zuweisungsanforderung zugeordnet waren;
3. Auswertung (1090) des Wertes von M - N:
a. Wenn er größer oder gleich einem vorgegebenen Schwellenwert ist (1090-OK), erhöht der Verwalter des ersten Knotens (1100) die Anzahl der lokalen Tokens, die dem zweiten Prozess zugeordnet sind, um N, und es wird zum Überprüfungsschritt (1010) zurückgekehrt;
b. Wenn er unter dem vorgegebenen Schwellenwert liegt (1090-KO), wird der Wert von M bewertet (1110):
i. Wenn er über dem vorgegebenen Schwellenwert liegt (1110-OK), sendet der Verwalter des ersten Knotens (1120) eine zweite Zuweisungsanforderung mit einem Parameter, dessen Wert M - N ist, erhöht (1130) die Anzahl der lokalen Tokens um M und kehrt zum Überprüfungsschritt (1010) zurück.
ii. Wenn er kleiner oder gleich dem vorgegebenen Schwellenwert ist (1110-KO), dann führt der Verwalter des ersten Knotens folgendes durch:
1. Sendet (1140) an den Verwalter des zweiten Knotens eine dritte Zuweisungsanforderung für den zweiten Prozess mit einem Parameter, dessen Wert - N ist,
2. Sendet (1150) eine Benachrichtigung ohne Bestätigungsmechanismus an den Verwalter des zweiten Knotens, in der er angibt, dass er N Token für den zweiten Prozess erwartet;
3. Begibt sich (1160) in einen Wartezustand auf eine Antwort auf die Benachrichtigung;
4. Wenn er (1170) eine Antwort auf die Benachrichtigung erhält, die einen Parameter N' enthält, der die Anzahl der zugewiesenen Tokens angibt, erhöht der Verwalter des ersten Knotens die Anzahl der lokalen Tokens, die dem zweiten Prozess zugeordnet sind, um N' und kehrt zum Überprüfungsschritt (1010) zurück.

2. Verfahren zur Interprozesskommunikation gemäß dem vorhergehenden Anspruch, **dadurch gekennzeichnet, dass** die Aktualisierung der Token-Anzahl (1040, 1050) nur durchgeführt wird, wenn die fachspezifische Suchanfrage erfolgreich verarbeitet wurde.

3. Kommunikationsverfahren gemäß einem der vorstehenden Ansprüche, **dadurch gekennzeichnet, dass** der vorgegebene Schwellenwert Null ist.

4. Verfahren zur Interprozesskommunikation gemäß einem der vorstehenden Ansprüche, **dadurch gekennzeichnet, dass** der Wert des Parameters N der ersten Zuweisungsanforderung ein Parameter des Knotens ist.

5. Verfahren zur Interprozesskommunikation gemäß einem der vorstehenden Ansprüche, **dadurch gekennzeichnet, dass** eine fachspezifische Suchanfrage eine Leseanforderung ist.

6. Verfahren zur Interprozesskommunikation gemäß einem der Ansprüche 1 bis 4, **dadurch gekennzeichnet, dass** eine fachspezifische Suchanfrage eine Schreibanforderung ist.

7. Verfahren zur Interprozesskommunikation gemäß einem der vorstehenden Ansprüche, **dadurch gekennzeichnet, dass** der Verwalter des zweiten Knotens bei Empfang einer vom Verwalter des ersten Knotens gesendeten Zuweisungsanforderung die Anzahl der lokalen Tokens um den Wert des in der Zuweisungsanforderung enthaltenen Parameters für den in der Anforderung bezeichneten Prozess verringert.

8. Verfahren zur Interprozesskommunikation gemäß einem der vorstehenden Ansprüche, **dadurch gekennzeichnet, dass** der Ressourcenmanager des zweiten Knotens die folgenden Schritte ausführt:
- Warten (2000) auf eine Benachrichtigung:
∘ Wenn keine Benachrichtigung empfangen wird, wird weiter gewartet (2000);
∘ Wenn eine Benachrichtigung empfangen wird, werden für den in der Benachrichtigung angegebenen Prozess (2010) die folgenden Aktionen durchgeführt:
1. Lesen (2020) einer Anzahl m von Tokens, wobei m die Anzahl der für den als Remote-Prozess bezeichneten Prozess verfügbaren Tokens ist;
2. Bewertung (2030) von m:
a. Wenn m kleiner oder gleich dem vorgegebenen Schwellenwert ist (2030-KO), wird die Verarbeitung (2010) der Benachrichtigung wiederholt.
b. Wenn m größer als der vorgegebene Schwellenwert (2030-OK) ist, dann Reduzierung (2040) der Anzahl der Tokens, die dem durch die Benachrichtigung bezeichneten Prozess zugeordnet sind, um N, wobei N die Anzahl der durch die Benachrichtigung angeforderten Tokens ist,
c. Bewertung von m - N:
i. Wenn m - N streng größer als der vorgegebene Schwellenwert (2050-OK) ist, dann führt der zweite Ressourcenmanager Folgendes aus:
1. Sendet (2060) eine Antwort auf die Benachrichtigung mit dem Wert N als Parameter;
ii. Wenn m - N kleiner oder gleich dem vorgegebenen Schwellenwert ist, dann führt der zweite Ressourcenmanager (2050-KO) Folgendes aus:
1. Sendet eine Antwort auf die Benachrichtigung mit dem Wert N' = m als Parameter;
2. Erhöht die Anzahl der Tokens, die dem als Remote-Prozess bezeichneten Prozess zugeordnet sind, um N - m.

9. Verfahren zur Interprozesskommunikation gemäß Anspruch 8, **dadurch gekennzeichnet, dass** eine Zeitverzögerung durchgeführt wird, bevor die Verarbeitung der Benachrichtigung wieder aufgenommen wird.

10. Computerprogramm zur Durchführung von Interprozesskommunikation, das geeignet ist und vorzugsweise konfiguriert ist, um ein Verfahren zur Interprozesskommunikation gemäß einem der Ansprüche 1 bis 9 durchzuführen.

11. Aufzeichnungsmedium, auf dem ein Computerprogramm zur Durchführung von Interprozesskommunikation gemäß Anspruch 10 aufgezeichnet ist.

## Claims

1. A method for interprocess communication between at least two processes, each process being hosted by a node on a communication network, each process being assigned at least one private memory, a node further hosting a process including a resource manager, **characterised in that** a resource manager comprises at least one resource counter for a target process of a communication, the method according to the invention comprising at least the following steps of:
- Emitting (1000) by a first process of a first node, to the resource manager of the first node, a specification request intended for a second process of a second node, the specification request being a request to perform processing on the at least one private memory of the second process by the second process and to return the result of said processing in response;
- Verifying (1010), by the manager of the first node, that there is at least one token associated with the second process locally:
∘ If there is (1020-OK) a local token, then:
1. The specification request is transmitted (1030) to the second process;
2. The number of local tokens associated with the second process is decreased (1050) by one by the resource manager of the first node;
3. The number of remote tokens associated with the second process is increased (1040) by one by the resource manager of the second node;
∘ If there is no local token (1020-KO):
1. Emitting (1060), by the manager of the first node, a first request for allocation of tokens associated with the second process to the manager of the second node, the first allocation request including a parameter N representing the number of tokens requested;
2. Receiving (1080), by the manager of the first node, a response to the first allocation request, the response including a parameter M representing the number of remote tokens associated with the second process before receiving the first allocation request;
3. Evaluating (1090) the value of M - N:
a. If it is greater than or equal to a predetermined threshold (1090-OK), then the manager of the first node increases (1100) the number of local tokens associated with the second process by N and returns to the verification step (1010);
b. If it is less than the predetermined threshold (1090-KO), then evaluating (1110) the value of M:
i. If it is greater than the predetermined threshold (1110-OK), then the manager of the first node transmits (1120) a second allocation request with a parameter having a value of M - N, increases (1130) the number of local tokens by M, and returns to the verification step (1010);
ii. If it is less than or equal to the predetermined threshold (1110-KO), then the manager of the first node:
1. Transmits (1140) a third allocation request for the second process to the manager of the second node with a parameter having a value of -N,
2. Transmits (1150) a notification to the manager of the second node, without an acknowledgement mechanism, specifying that it is waiting for N tokens for the second process;
3. Enters (1160) a condition of waiting for a response to the notification;
4. When it receives (1170) a response to the notification, which includes a parameter N' representing the number of tokens allocated, the manager of the first node increases the number of local tokens associated with the second process by N' and returns to the verification step (1010).

2. The interprocess communication method according to the preceding claim, **characterised in that** updating the numbers of tokens (1040, 1050) is performed only if the specification request is successfully processed.

3. The interprocess communication method according to the preceding claim, **characterised in that** the predetermined threshold is zero.

4. The interprocess communication method according to one of the preceding claims, **characterised in that** the value of parameter N of the first allocation request is a node parameter.

5. The interprocess communication method according to one of the preceding claims, **characterised in that** a specification request is a read request.

6. The interprocess communication method according to one of claims 1 to 4, **characterised in that** a specification request is a write request.

7. The interprocess communication method according to one of the preceding claims, **characterised in that**, upon receiving an allocation request transmitted by the manager of the first node, the manager of the second node decreases the number of local tokens by the value of the parameter included in the allocation request for the process designated by the request.

8. The interprocess communication method according to one of the preceding claims, **characterised in that** the resource manager of the second node implements the following steps of:
- Waiting (2000) for a notification:
∘ If no notification is received, then continuing (2000) to wait;
∘ If a notification is received, then for the process designated (2010) by the notification, the following actions are performed:
1. Reading (2020) a number m of tokens, where m is the number of tokens available for the process designated as the remote process;
2. Evaluating (2030) m:
a. If m is less than or equal to the predetermined threshold (2030-KO), then restarting processing (2010) of the notification;
b. If m is strictly greater than the predetermined threshold (2030-OK), then reducing (2040) the number of tokens associated with the process designated by the notification by N, N being the number of tokens requested by the notification,
c. Evaluating m - N:
i. If m - N is strictly greater than the predetermined threshold (2050-OK), then the second resource manager:
1. Transmits (2060) a response to the notification with the value N as a parameter;
ii. If m - N is less than or equal to the predetermined threshold, then the second resource manager (2050-KO):
1. Transmits a response to the notification with the value N' = m as the parameter;
2. Increases the number of tokens associated with the process designated as a remote process by N - m.

9. The interprocess communication method according to claim 8, **characterised in that** a time delay is observed before restarting processing of the notification.

10. A computer program for performing interprocess communications, able to, preferably configured to, implement an interprocess communication method according to one of claims 1 to 9.

11. A recording medium having a computer program for performing interprocess communication according to claim 10 recorded thereon.
